# DEMANDE DE BREVET EUROPEEN

(11) **EP 4 652 826 A1**
(43) Date de publication de la demande: **26.11.2025**
(21) Numéro de dépôt: 25175596.3
(22) Date de dépôt: 12.05.2025
(51) Int. Cl.: A01B 59/00, A01B 59/043, A01B 59/06, A01D 67/00, A01D 80/00, B60D 1/155, B62D 1/02, A01B 73/00, A01B 59/041

(54) **SYSTÈME DE REHAUSSE POUR MACHINE AGRICOLE PORTÉE**

(30) Priorité: 21.05.2024 FR 2405154
(71) Demandeur: Kuhn SAS, 67700 Saverne (FR)
(72) Inventeur: SPEICH, Cédric, 67270 ALTECKENDORF (FR)

(57) **Abrégé**

La présente invention concerne une machine agricole portée pouvant occuper une position de travail et une position soulevée, et comportant un cadre destiné à être relié à un tracteur, un outil monté pivotant par rapport au cadre autour d'un axe de pivot et d'un axe transversal, deux bielles de longueur variable, chacune formant, à sa longueur minimale, une butée limitant le pivotement de l'outil autour de l'axe de pivot, la machine étant agencée de sorte que les bielles tendent à se rétracter dans sa position soulevée, et au moins un vérin directeur relié à une de ses extrémités avec l'un entre l'outil et le cadre, et à l'autre extrémité, avec l'autre de l'outil ou du cadre. Dans la position soulevée, l'au moins un vérin directeur est maintenu à une longueur fixe supérieure à sa longueur minimale.

## Description

La présente invention concerne le domaine du machinisme agricole. Plus particulièrement, l'invention concerne une machine agricole pouvant occuper une position de travail et au moins une position soulevée dans laquelle tout le poids de la machine est reporté sur un tracteur apte à se déplacer avec la machine dans une direction d'avance, et comportant :
- un cadre destiné à être relié à un attelage à trois points d'un tracteur,
- un outil pouvant reposer sur le sol par le biais d'appuis, l'outil étant monté pivotant par rapport au cadre autour d'un axe de pivot, l'outil étant par ailleurs monté pivotant suivant un axe transversal,
- deux bielles de longueur variable, chacune formant, lorsqu'elle est à sa longueur minimale, une butée permettant de limiter le pivotement de l'outil autour de l'axe de pivot, la machine étant agencée de sorte que les bielles tendent à se rétracter jusqu'à leur longueur minimale dans sa position soulevée.

Il est possible réaliser cette machine par une machine de fenaison permettant de rassembler en andains du produit de récolte gisant au sol avec un rotor de ratissage entrainé autour d'un axe vertical.

Une machine telle qu'il vient d'être décrite est connu du document EP 2 959 759 A1 et comprend un outil avec un rotor de ratissage pouvant être abaissé au sol dans un position de travail et levé dans une position soulevée dans laquelle tout le poids de la machine est reporté sur le tracteur via l'attelage à trois points. Dans une première variante de réalisation du document EP 2 959 759 A1, chacune des bielles est reliée au cadre par le biais d'une pièce intermédiaire, elle-même articulée avec le cadre suivant un axe horizontal. La position de cette pièce intermédiaire est commandée par la position de l'attelage. Dans la position soulevée de la machine, les bielles sont à leur longueur minimale.

Dans une variante de réalisation de ce document, chacune des bielles de longueur variable est réalisée par un trou oblong dans lequel un axe est monté coulissant, et chacune des bielles est reliée avec l'outil d'une part et avec un vérin directeur d'autre part. Les vérins directeurs sont reliés en circuit fermé avec un troisième vérin articulé d'une part à l'outil, et d'autre part au cadre. Dans la position soulevée de la machine, les bielles et les vérins directeurs sont rétractés à leur longueur minimale. Sur certains tracteurs et/ou certains attelages à trois points, ces longueurs minimales en position soulevée induisent une distance dangereuse entre l'outil et le sol, risquant que l'outil heurte le sol lorsque le tracteur se déplace sur une surface accidentée, surtout à vitesse élevée. Un autre inconvénient de la machine de ce document est qu'elle nécessite un nombre important de pièces, de vérins et d'articulations. Ce type de construction est donc compliquée, onéreux et nécessite une adaptation importante de la machine, respectivement de la liaison entre l'outil et le cadre.

Une façon de réduire les risques de dégâts sur la machine et/ou le sol en position soulevée serait d'augmenter la longueur minimale des bielles afin de rehausser l'outil en position soulevée. Ceci aurait cependant pour autre conséquence de réduire le secteur angulaire de pivotement de l'outil autour de l'axe de pivot dans la position de travail, réduisant alors le rayon de courbure minimal que peut effectuer le tracteur lors d'un virage serré. Aussi, plus la longueur minimale des bielles est importante, plus grand sera le risque de laisser des zones non travaillées en virage serré, réduisant la qualité de travail de la machine en virage.

Chacun des documents DE102006027814 A1 et EP3245857A1 divulgue également une machine agricole proche de celle décrite ci-dessus.

La présente invention a pour but de proposer une solution simple pour réduire le risque de détériorer le sol et/ou la machine en position soulevée sans perdre en qualité de travail lors de virages serrés, et préférentiellement de manière simple et économique.

A cet effet, l'invention propose que, soit au moins un vérin directeur est fixé à une de ses extrémités avec au moins une bielle et à son autre extrémité avec l'outil, soit au moins un vérin directeur est fixé avec au moins une biellette articulée d'une part avec l'outil et d'autre part avec au moins une des bielles.

Grâce à ces dispositions, la distance entre la machine et le sol est augmentée en position soulevée, réduisant les risques que la machine n'entre en collision avec le sol et donc de dégâts sur la machine et/ou le sol, sans diminuer la longueur minimale des bielles de sorte que la qualité de travail de la machine n'en pâtit pas, de manière simple et économique.

L'invention sera mieux comprise grâce à la description ci-après, qui se rapporte à différents modes de réalisation préférés, donnés à titre d'exemples non limitatifs, et expliqués avec référence aux dessins schématiques annexés, dans lesquels :
[Fig. 1] représente une vue latérale d'une machine attelée à l'arrière d'un tracteur, en position soulevée, et correspondant à l'état de la technique ;
[Fig. 2] représente une vue de dessus d'une machine selon le mode de réalisation préféré de l'invention, en position de travail ;
[Fig. 3] représente une vue latérale de la machine de la figure 2 dans laquelle l'outil est partiellement représenté ;
[Fig. 4] représente une vue de dessus de la machine de la figure 2 dans laquelle la bielle droite est rétractée et la bielle gauche allongée ;
[Fig. 5] représente une vue de dessus de la machine de la figure 2, en position soulevée ;
[Fig. 6] représente une vue latérale d'une machine selon une variante de réalisation dans laquelle une biellette est articulée avec l'outil, respectivement avec la poutre, avec la bielle droite et avec au moins un vérin directeur, et dans laquelle l'outil est partiellement représenté ;
[Fig. 7] représente un schéma simplifié de l'hydraulique de la machine selon le mode de réalisation préféré relié à l'hydraulique du tracteur.

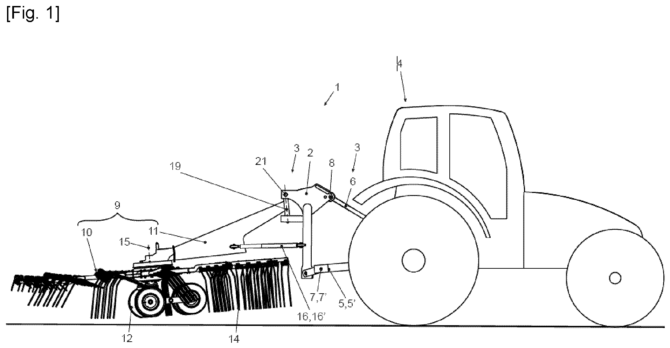

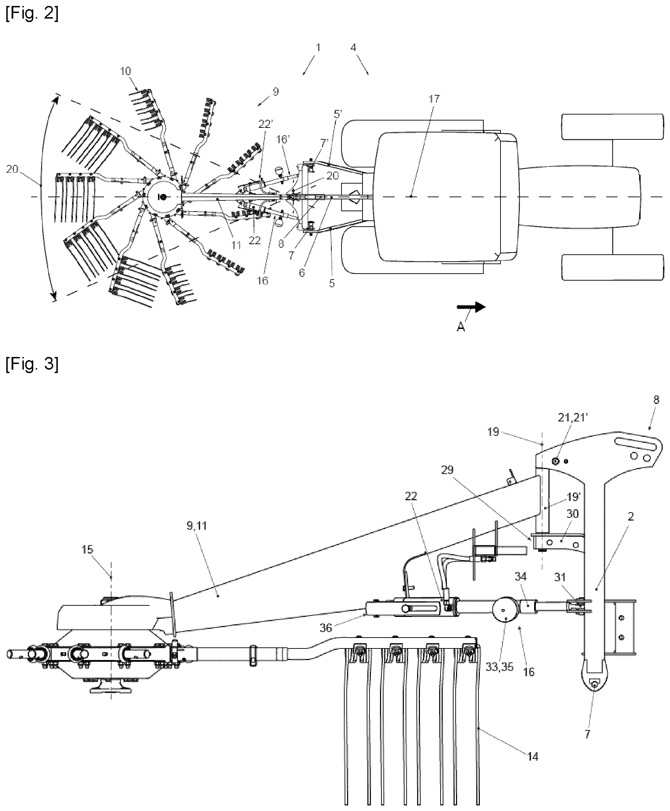

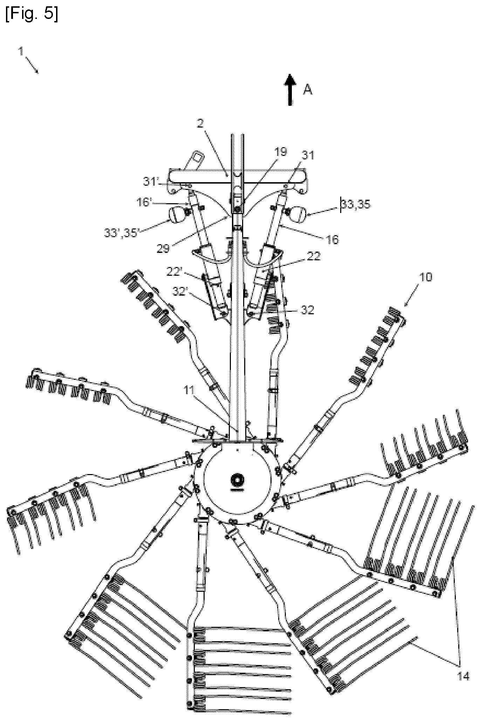

Les figures 1 à 6 montrent une machine (1) agricole comportant un cadre (2) destiné à être relié à un attelage (3) à trois points d'un tracteur (4) agricole. L'attelage (3) comprend un bras inférieur droit (5) et un bras inférieur gauche (5'). L'attelage (3) comprend également un bras supérieur (6). Tel qu'il ressort des figures 1 et 2, la machine (1) comporte un point inférieur droit (7), un point inférieur gauche (7') et un point d'accroche supérieur (8). Chacun des bras inférieur droit (5), inférieur gauche (5') et supérieur (6) est destiné à être accroché respectivement au point inférieur droit (7), au point inférieur gauche (7'), et au point d'accroche supérieur (8) de la machine (1). La droite passant par les points inférieurs (7, 7') est orientée horizontalement. Ainsi qu'il sera détaillé plus loin dans cette description, la machine (1) peut occuper une position de travail et au moins une position soulevée.

Telle que représentée sur la figure 1, la machine (1) occupe une position soulevée. Dans cette position soulevée, la machine (1) est éloignée du sol, respectivement soulevée du sol, par l'attelage (3) du tracteur (4). Dans la position soulevée, tout le poids de la machine (1) est reporté sur le tracteur (4). La machine (1) est donc une machine portée. La position soulevée de la machine (1) correspond à une position de non-utilisation, telle qu'une position de transport routier et/ou de manœuvre dans le champ. Préférentiellement, la position de transport et la position de manœuvre de la machine (1) sont identiques et correspondent à la position soulevée.

Le tracteur (4) est apte à se déplacer avec la machine (1) dans une direction d'avance (A). La direction d'avance (A) est préférentiellement horizontale. Le tracteur (4) permet également d'entraîner la machine (1) et ses accessoires, notamment grâce à sa prise de force et/ou son circuit hydraulique (13). Dans la présente description, les termes avant, arrière, devant, derrière, droite et gauche se rapportent à la machine (1) et sont définis en regardant dans la direction d'avance (A). Tel qu'il ressort des figures, la machine (1) est préférentiellement attelée à l'arrière du tracteur (4), de sorte à ne pas rouler sur le produit avant de le travailler.

La machine (1) comporte un outil (9). L'outil (9) permet de travailler un produit dans un champ. Le produit peut être la terre du champ et/ou un produit végétal tel que de l'herbe ou de la paille. Dans les exemples de réalisation des figures, l'outil (9) comporte un rotor (10) et une poutre (11).

L'outil (9) peut reposer sur le sol par le biais d'appuis (12). Sur les figures, ces appuis (12) sont réalisés par des roulettes roulant sur le sol. Afin d'améliorer le suivi de terrain de l'outil (9), deux roulettes sont préférentiellement reliées entre elles par un balancier monté pivotant suivant un axe horizontal par rapport à la poutre (11). Préférentiellement, chaque outil (9) comporte ainsi quatre roulettes. Alternativement ou additionnellement, les appuis (12) pourraient également être réalisés par un ou plusieurs patins glissant sur le sol.

Afin de permettre à l'outil (9) de suivre la trajectoire du tracteur (4) dans la position de travail de la machine (1), l'outil (9) est monté pivotant par rapport au cadre (2) autour d'un axe de pivot (19). En position de travail, l'axe de pivot (19) est préférentiellement vertical. L'outil (9) peut pivoter par rapport au cadre (2) autour de l'axe de pivot (19) au moins dans la position de travail de la machine (1). L'outil (9) est par ailleurs monté pivotant suivant un axe transversal (21). Au moins dans la position de travail, l'axe transversal (21) est horizontal. L'outil (9) est ainsi monté pivotant par rapport au cadre (2) autour de l'axe transversal (21).

La machine (1) comporte également deux bielles (16, 16') de longueur variable. Chacune des bielles (16, 16') relie le cadre (2) à l'outil (9). Tel qu'il ressort de la figure 2, la machine (1) comporte une bielle droite (16) et une bielle gauche (16'). Chacune des bielles (16, 16') est préférentiellement montée d'un côté respectif d'un plan médian (17).

Le plan médian (17) est vertical. Il passe préférentiellement par le centre du cadre (2) et/ou par le point d'accroche supérieur (8). Le plan médian (17) est parallèle à la direction d'avance (A). Le plan médian (17) est préférentiellement orthogonal à la droite passant par les points inférieurs (7, 7'). Le plan médian (17) forme préférentiellement un plan de symétrie du tracteur (4). Enfin, le plan médian (17) est à équidistance des points inférieurs (7, 7').

Lorsqu'elle est à sa longueur minimale, chacune des bielles (16, 16') forme une butée permettant de limiter le pivotement de l'outil (9) autour de l'axe de pivot (19). On évite ainsi que l'outil (9) n'entre en contact avec le tracteur (4) et ne cause des dégâts. Précisément, la bielle droite (16) permet de limiter le pivotement de l'outil (9) autour de l'axe de pivot (19) lorsqu'elle est à sa longueur minimale dans un sens de rotation, et la bielle gauche (16') dans l'autre sens de rotation.

La machine (1) est par ailleurs agencée de sorte que, dans sa position soulevée, les bielles (16, 16') tendent à se rétracter jusqu'à leur longueur minimale. Dans la position soulevée, les bielles (16, 16') sont ainsi préférentiellement à leur longueur minimale, permettant de maintenir une orientation déterminée de l'outil (9) autour de l'axe de pivot (19) dans cette position soulevée. En effet, lorsque la machine (1) est soulevée par l'attelage (3), l'outil (9) pivote vers le bas autour de l'axe transversal (21). Préférentiellement, c'est le poids de l'outil (9) qui induit le pivotement de l'outil (9) vers le bas (et l'avant) autour de l'axe transversal (21) et donc la rétractation des bielles (16, 16'). Dans la position soulevée, l'outil (9) est maintenu dans une orientation déterminée non seulement autour de l'axe de pivot (19) mais également autour de l'axe transversal (21). Il ressort de ce qui précède qu'en position soulevée de la machine (1), l'outil (9) est préférentiellement maintenu en position par son propre poids.

Ainsi que représenté sur les figures 2 à 5, la machine (1) comporte également au moins un vérin directeur (22, 22') relié à une de ses extrémités avec le cadre (2) et à l'autre extrémité, avec l'outil (9). Dans le cas où la machine (1) ne comprend qu'un vérin directeur (22, 22'), à une des extrémités est fixé l'outil (9) ou le cadre (2) et l'autre avec les deux bielles (16, 16'). Dans le cas où la machine (1) comprend deux vérins directeurs (22, 22'), l'outil (9) ou le cadre (2) est fixé à une extrémité de chacun des vérins directeurs (22, 22'), tandis que l'autre extrémité de chacun des vérins directeurs (22, 22') est fixée avec une extrémité d'une bielle (16, 16') respective. L'au moins un vérin (22, 22') est préférentiellement hydraulique, comme la majorité des fonctions de puissance sur machines agricoles. Alternativement, l'au moins un vérin (22, 22') pourrait être électrique.

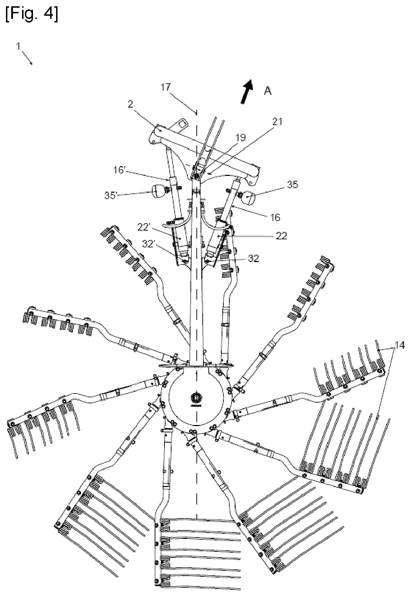

Ainsi que le montre la figure 4, lorsque la machine (1) effectue un virage, une des bielles (16, 16') s'allonge et l'autre se rétracte. Il ressort de la figure 4 que dans un virage serré vers la droite, la bielle droite (16) est à sa longueur minimale. Du fait qu'à sa longueur minimale, la bielle droite (16) forme une butée limitant le pivotement de l'outil (9) autour de l'axe de pivot (19), la bielle gauche (16') est à sa longueur maximale lorsque la machine (1) effectue un virage serré vers la droite. Inversement, la bielle gauche (16') est à sa longueur minimale et la bielle droite (16) est à sa longueur maximale lorsque la machine (1) effectue un virage serré vers la gauche.

Une autre conséquence du fait que les bielles (16, 16') sont en butée à leur longueur minimale est que, dans la position de travail, l'outil (9) est monté pivotant par rapport au cadre (2) autour de l'axe de pivot (19) selon un secteur angulaire de pivotement (20) limité. L'étendue du secteur angulaire de pivotement (20) dépend des longueurs minimales des bielles (16, 16'). Dans le mode de réalisation préféré, afin d'éviter de laisser des zones non travaillées par la machine (1), le secteur angulaire de pivotement (20) est préférentiellement supérieur à 30°, plus préférentiellement sensiblement égal à 45°.

L'orientation déterminée de l'outil (9) par rapport au cadre (2) autour de l'axe de pivot (19) dépend ainsi de la longueur minimale de chaque bielle (16, 16'). Il peut être prévu que la longueur minimale de chaque bielle (16, 16') soit réglable, permettant d'adapter le secteur angulaire de pivotement (20) au tracteur (4), respectivement à la largeur du tracteur (4).

Une importante caractéristique réside dans fait que soit l'au moins un vérin directeur (22, 22') est fixé à une de ses extrémités avec au moins une bielle (16, 16') et à son autre extrémité avec l'outil (9), soit l'au moins un vérin directeur (22, 22') est fixé avec au moins une biellette (23, 23') articulée d'une part avec l'outil (9) et d'autre part avec au moins une des bielles (16, 16'). Ainsi, en position soulevée de la machine (1), l'allongement de l'au moins un vérin directeur (22, 22') implique un pivotement vers le haut de l'outil (9). En effet, l'au moins un vérin directeur (22,22') pouvant être maintenu à une longueur fixe supérieure à sa longueur minimale en position soulevée permet avantageusement d'augmenter la distance séparant la machine (1) du sol dans cette position, et de réduire ainsi le risque de détériorer le sol et/ou la machine (1) de manière simple et économique. En outre, du fait que dans la position soulevée, les deux bielles (16, 16') sont à leur longueur minimale et que l'au moins un vérin directeur (22, 22') est maintenu à une longueur fixe, le pivotement de l'outil (9) autour de l'axe de pivot (19) est avantageusement bloqué. L'outil (9) peut ainsi pivoter par rapport au cadre (2) autour de l'axe de pivot (19) uniquement dans la position de travail de la machine (1).

Tel que représenté sur la figure 1, sur une machine (1) de l'état de la technique, aucun vérin directeur (22, 22') ne permet de rattraper l'affaissement de la machine (1) dans sa position soulevée lorsque les bielles (16, 16') sont à leur longueur minimale. Cette figure 1 pourrait également correspondre à une machine (1) selon l'invention dans la position soulevée avec le ou chaque vérin directeur (22, 22') à sa longueur minimale.

On définit la course de chaque bielle (16, 16') par la distance séparant sa longueur minimale et sa longueur maximale. Afin d'autoriser le pivotement de l'outil (9) autour de l'axe de pivot (19), en position de travail et en ligne droite, chaque bielle (16, 16') est préférentiellement sensiblement à mi-course, respectivement sensiblement à la moitié de sa course, ainsi que représentée sur la figure 2.

Si, alors que la machine (1) est dans sa position de travail avec une des bielles (16, 16') plus allongée que l'autre bielle (16, 16') (tel que représentée sur la figure 4), et que la machine (1) est soulevée par l'attelage (3), le poids de l'outil (9) va non seulement induire son pivotement vers le bas et l'avant autour de l'axe transversal (21), mais également son pivotement autour de l'axe de pivot (19) jusqu'à ce que les bielles (16, 16') arrivent à leur longueur minimale, respectivement jusqu'à ce que l'outil (9) atteigne son orientation déterminée autour de l'axe de pivot (19). Aussi, dans la position soulevée de la machine (1), l'outil (9) occupe une orientation déterminée autour de l'axe de pivot (19). De manière simple et symétrique, dans la position soulevée de la machine (1), la poutre (11) est préférentiellement parallèle au plan médian (17) en vue de dessus, respectivement vu suivant l'axe de pivot (19).

Dans la position de travail de la machine (1), l'au moins un vérin directeur (22, 22') peut être monté flottant. Autrement dit, l'au moins un vérin directeur (22, 22') peut être relié à un réservoir hydraulique de sorte à pouvoir s'allonger et se rétracter librement du fait d'une force extérieure. Dans la position de travail de la machine (1), l'au moins un vérin directeur (22, 22') peut ainsi être relié à un réservoir hydraulique atmosphérique, respectivement un réservoir dont le fluide est stocké à une pression proche de la pression atmosphérique, comme un réservoir (26) du tracteur (4) par exemple.

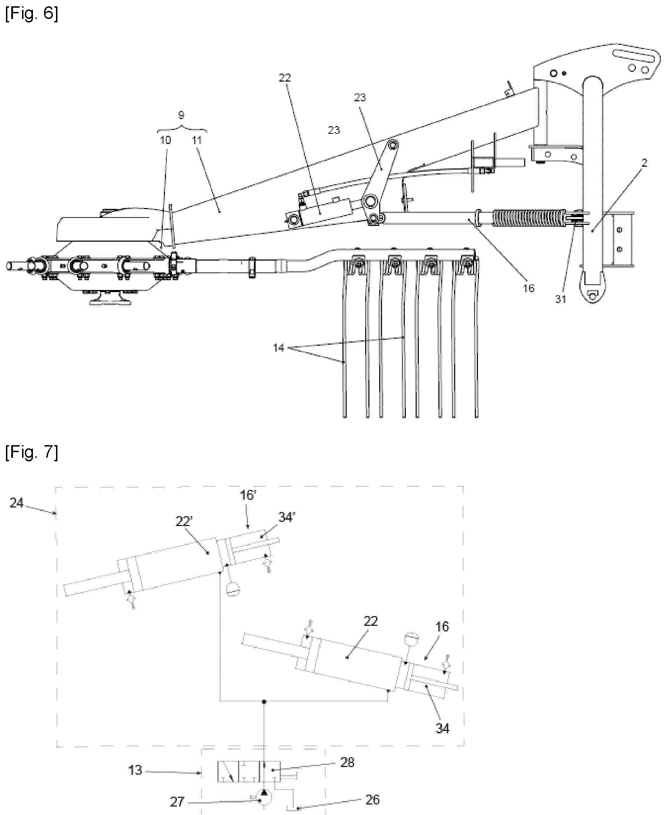

Ainsi qu'illustré sur la figure 7, la machine (1) comporte un circuit hydraulique (24). Le tracteur (4) est également équipé d'un circuit hydraulique (13) comportant au moins un réservoir (26), une pompe (27) et un distributeur (28) hydraulique. Le circuit hydraulique (24) de la machine (1) peut être relié à la pompe (27) ou au réservoir (26) par le biais du distributeur (28). La pompe (27) peut ainsi envoyer de l'huile sous pression dans le circuit hydraulique (24) de la machine (1).

De manière simple, le ou chaque vérin directeur (22, 22') est relié à un distributeur (28) hydraulique du tracteur (4), permettant de gérer simplement et économiquement sa ou leur longueur, ce depuis la cabine du tracteur (4). En outre, une telle liaison hydraulique du ou des vérins directeurs (22, 22') évite d'avoir recourt à un vérin additionnel entre le cadre (2) et l'outil (9), respectivement recourt à un distributeur (28) et/ou une valve hydraulique supplémentaire afin de pouvoir alimenter séparément le ou les vérins directeurs (22, 22') et le vérin additionnel. De préférence, le distributeur (28) relié à l'au moins un vérin directeur (22, 22') est en position fermée dans la position de travail, évitant des mouvements non contrôlés de l'outil (9). Préférentiellement aussi, le distributeur (28) relié à l'au moins un vérin directeur (22, 22') est en position fermé dans la position soulevée, permettant de maintenir de manière simple l'au moins un vérin directeur (22, 22') à une longueur fixe (supérieure à sa longueur minimale). Dans la position soulevée de la machine (1), l'au moins un vérin directeur (22, 22') est de longueur fixe car il est isolé hydrauliquement. Ainsi, le distributeur (28) relié à l'au moins un vérin directeur (22, 22') est aussi en position fermée dans la position soulevée.

Alternativement, l'au moins vérin directeur (22, 22') pourrait être actionné grâce à une commande électronique. Notamment le vérin directeur (22, 22') pourrait être actionné grâce à l'actionnement d'au moins une touche d'une interface électronique. L'interface électronique peut être un joystick et/ou un terminal de commande avec écran. Ainsi, l'actionnement de l'au moins un vérin directeur (22, 22') est dû à une commande manuelle volontaire, l'utilisateur pouvant avantageusement choisir d'actionner ledit vérin directeur (22, 22') afin d'augmenter la distance entre l'outil (9) et le sol, ou de ne pas actionner le vérin directeur (22, 22') afin d'éviter une perte de temps.

Un autre avantage de monter au moins un vérin directeur (22, 22') relié à un distributeur (28) du tracteur (4) entre l'outil (9) et le cadre (2) est qu'il permet de régler le secteur angulaire de pivotement (20) de l'outil (9). Lorsque la machine (1) est réalisée sous la forme d'un andaineur et qu'elle se situe sur un sol en (fort) dévers, réduire le secteur angulaire de pivotement (20) de l'outil (9) permet d'assurer le placement de l'andain par rapport au tracteur (4). Autrement dit, en allongeant l'au moins un vérin directeur (22, 22') et en le maintenant à une longueur fixe comprise entre sa longueur minimale et sa longueur maximale dans la position de travail de la machine (1), il est possible de positionner la machine (1), respectivement l'andain, par rapport au tracteur (4) vu suivant la direction d'avance (A).

Ainsi qu'il ressort des figures 1, 3 et 6, pour guider son mouvement dans un plan vertical, l'outil (9), respectivement la poutre (11), présente une articulation commune avec le cadre (2), permettant de réduire le nombre de pièces et d'articulations de la machine (1). L'articulation commune entre la poutre (11) est le cadre (2) est réalisée par l'axe transversal (21). La tige (21') permettant le pivotement autour de l'axe transversal (21) peut faire partie intégrante de la poutre (11) ou du cadre (2). Afin de permettre le déplacement vers le haut de la totalité du rotor (10) lorsque l'outil (9) est pivoté vers le haut autour de l'axe transversal (21), l'axe transversal (21) est préférentiellement situé à l'avant de l'outil (9), respectivement à l'extrémité avant de la poutre (11).

Dans une variante de réalisation, dans la position de travail, les pivotements de l'outil (9) par rapport au cadre (2) autour de l'axe transversal (21) et de l'axe de pivot (19) sont possibles autour d'une liaison rotule.

Sur les exemples de réalisation des figures, la poutre (11) relie au moins un rotor (10) au cadre (2). Préférentiellement, l'outil (9) comporte un seul rotor (10), rendant la machine (1) plus simple, moins onéreuse et plus maniable. Dans le mode de réalisation préféré, la machine (1) est un andaineur. Alternativement, la machine (1) pourrait être un faneur ou une herse rotative. Dans le cas d'un andaineur, le ou chaque rotor (10) est doté de bras à l'extrémité desquels sont fixés des doigts (14) de ratissage. Le ou chaque rotor (10) peut être entrainé en rotation autour d'un axe d'entrainement (15), les doigts (14) situés à l'avant du rotor (10) déplaçant ainsi du produit gisant au sol lorsque la machine (1) est en position de travail et qu'elle se déplace dans la direction d'avance (A). Dans le cas d'un andaineur, le produit est végétal, tel que de l'herbe coupée ou de la paille coupée, et le déplacement du produit permet de le rassembler en un andain longitudinal à la direction d'avance (A).

Sur un andaineur, un chemin de came permet de guider l'orientation des doigts (14) en fonction de leur position autour de l'axe d'entrainement (15). Lorsque le rotor (10) pivote autour de son axe d'entrainement (15), les doigts (14) pivotent suivant un axe horizontal sensiblement parallèle au bras respectif. Afin de ratisser le produit sur l'avant de chaque rotor (10), les doigts (14) sont sensiblement verticaux lorsqu'ils sont devant l'axe d'entrainement (15). A cet effet, l'axe d'entrainement (15) est préférentiellement vertical. Afin notamment de déplacer le produit latéralement, les pointes des doigts (14) sont éloignées du sol sur approximativement la moitié arrière du rotor (10).

Plus la distance entre l'axe transversal (21) et le ou chaque vérin directeur (22, 22') est importante, moins le ou les vérin(s) directeur(s) (22, 22') doivent être puissants. Ainsi, pour augmenter le bras de levier et éviter un surdimensionnement, l'axe transversal (21) est préférentiellement situé sur le haut du cadre (2) tandis que l'au moins un vérin directeur (22, 22') est articulé sur le bas de la poutre (11). De plus, plus ce bras de levier est important, moins les contraintes dans la poutre (11) seront importantes en position soulevée de la machine (1). Si le vérin directeur (22, 22') était assemblé plus bas, il risquerait de rencontrer le rotor (10) dans la position de travail, le rotor (10) étant préférentiellement situé sous la poutre (11) dans la position de travail.

Ainsi qu'il ressort de la figure 3, la machine (1) comporte également une butée arrière (29) permettant de limiter le pivotement de l'outil (9) autour de l'axe transversal (21). De préférence, la butée arrière (29) permet de limiter le pivotement de l'outil (9) vers l'arrière et le haut autour de l'axe transversal (21). Tel que représenté sur les figures 3 et 6, dans la position de travail de la machine (1), l'outil (9) est maintenu en appui sur la butée arrière (29). Préférentiellement, lorsque l'outil (9) est en appui sur la butée arrière (29) et la machine (1) en position de travail, l'axe de pivot (19) est sensiblement vertical, favorisant une bonne qualité de travail, au moins dans le cas où la machine (1) est un andaineur. Dès lors que la machine (1) est soulevée du sol, et notamment en position soulevée, l'outil (9) n'est plus en appui sur la butée arrière (29) et bascule alors vers le bas et l'avant, à moins que le ou chaque vérin directeur (22, 22') ne soit alimenté.

Tel que représenté sur les figures, la butée arrière (29) est réalisée par une chappe (30) solidaire du cadre (2). Une tige verticale (19') permet de guider le mouvement de l'outil (9) autour de l'axe de pivot (19). La tige verticale (19') est montée mobile dans la chappe (30). Dans le mode de réalisation préféré, la chappe (30) est en forme de U et guide le pivotement de la tige verticale (19'), autorisant ainsi le mouvement de l'outil (9) autour de l'axe transversal (21). Afin de ne pas perturber le pivotement de l'outil (9) autour de l'axe de pivot (19), la butée arrière (29) est préférentiellement reliée au centre du cadre (2).

En vue d'éloigner l'outil (9) du sol au maximum dans la position soulevée, l'au moins un vérin directeur (22, 22') est préférentiellement dimensionné de sorte que l'outil (9) soit en appui sur la butée arrière (29) lorsque le ou chaque vérin directeur (22, 22') est allongé. Plus précisément, en vue d'éloigner l'outil (9) du sol au maximum dans la position soulevée tout en évitant d'endommager la butée arrière (29), la course de l'au moins un vérin directeur (22, 22') est préférentiellement dimensionnée de sorte que l'outil (9) soit en appui sur la butée arrière (29) lorsque l'au moins un vérin directeur (22, 22') présente sa longueur maximale. Un avantage d'une telle réalisation est également que lorsque les deux bielles (16, 16') sont à leur longueur minimale et l'au moins un vérin directeur (22, 22') à sa longueur maximale, le pivotement de l'outil (9) autour de l'axe transversal (21) est également bloqué, réduisant encore davantage le risque de détériorer le sol et/ou la machine (1) dans la position soulevée.

Ainsi qu'il a été spécifié précédemment dans cette description, en position de travail, chacune des bielles (16, 16') est à mi-course. Aussi, afin d'éviter d'endommager la butée arrière (29) par allongement de l'au moins un vérin directeur (22, 22'), la course de l'au moins un vérin directeur (22, 22') est préférentiellement inférieure aux trois quarts de la course de chaque bielle (16, 16'), respectivement aux trois quarts de la course de la bielle (16, 16') présentant la plus petite course. Plus préférentiellement, la course de l'au moins un vérin directeur (22, 22') est sensiblement égale à la moitié de la course de chaque bielle (16, 16'), respectivement à la moitié de la course de la bielle (16, 16') présentant la plus petite course.

Chaque bielle (16, 16') est articulée avec le cadre (2) par une articulation avant (31, 31') respective. Afin d'autoriser le mouvement de l'outil (9) d'une part autour de l'axe de pivot (19), et d'autre part autour de l'axe transversal (21), chaque articulation avant (31, 31') est préférentiellement une rotule. Alternativement, chaque articulation avant (31, 31') peut être réalisée par une liaison cardan.

Dans une première variante de réalisation, l'au moins un vérin directeur (22, 22') est fixé avec au moins une biellette (23, 23') articulée d'une part avec l'outil (9) et d'autre part avec au moins une des bielles (16, 16'). Dans cette variante, l'au moins un vérin directeur (22, 22') est relié avec le cadre (2) par le biais de l'au moins une biellette (23, 23') et de l'au moins une bielle (16, 16'). Dans cette première variante, afin de guider le mouvement de l'outil (9) dans un plan vertical, le ou chaque vérin directeur (22, 22') est articulé avec l'au moins une biellette (23, 23') autour d'un axe horizontal, et la ou chaque biellette (23,23') est articulée avec l'outil (9), respectivement avec la poutre (11), autour d'un axe horizontal. Dans cette première variante de réalisation, chaque bielle (16, 16') est articulée avec au moins une biellette (23, 23') par une articulation arrière (32, 32') respective.

De préférence, chaque biellette (23,23') est articulée avec l'outil (9) par le biais de Telle que représentée sur la figure 6, dans cette première variante, afin de guider le mouvement de l'outil (9), du ou de chaque vérin directeur (22, 22') et/ou de la ou chaque biellette (23, 23'), la ou chaque biellette (23, 23') est articulée avec la poutre (11) suivant un axe parallèle à l'axe transversal (21), évitant un mouvement parasite de l'outil (9) pouvant nuire à la qualité de travail. Pour la même raison, la ou chaque biellette (23, 23') est articulée avec le ou un vérin directeur (22, 22') suivant un axe parallèle à l'axe transversal (21). Toujours afin d'éviter un mouvement parasite de l'outil (9), le ou chaque vérin directeur (22, 22') est préférentiellement articulée avec l'outil (9) suivant un axe parallèle à l'axe transversal (21). Dans la première variante de réalisation, afin d'autoriser le mouvement de l'outil (9) d'une part autour de l'axe de pivot (19), et d'autre part autour de l'axe transversal (21), la ou chaque biellette (23, 23') est préférentiellement articulée avec la bielle (16, 16'), respectivement avec une des bielles (16, 16'), suivant une rotule ou une liaison cardan.

Dans le mode de réalisation préféré, ainsi qu'il est visible sur les figures 2 et 4 notamment, un vérin directeur droit (22) est monté du côté droit de l'outil (9) et un vérin directeur gauche (22') du côté gauche.

Dans une variante de réalisation non représentée, chaque vérin directeur (22, 22') est directement fixé à une de ses extrémités avec le cadre (2) et à son autre extrémité avec l'outil (9), sans pièce intermédiaire comme une bielle (16, 16') par exemple. Une telle réalisation présente cependant comme inconvénients de nécessiter des vérins directeurs (22, 22') plus longs, plus lourds et donc plus chers.

Dans le mode de réalisation préféré, l'au moins un vérin directeur (22, 22') est fixé à une de ses extrémités avec au moins une bielle (16, 16') et à son autre extrémité avec l'outil (9). Dans ce mode préféré, chaque vérin directeur (22, 22') est relié avec le cadre (2) par le biais d'une bielle (16, 16'). Le ou chaque vérin directeur (22, 22') est relié avec la poutre (11) par une articulation arrière (32, 32'). Préférentiellement, une extrémité du vérin directeur droit (22) est fixée avec la bielle droite (16), respectivement avec une extrémité de la bielle droite (16). Symétriquement, une extrémité du vérin directeur gauche (22') est fixée avec la bielle gauche (16'), respectivement avec une extrémité de la bielle gauche (16'). Ainsi, à chaque bielle (16, 16') est associé un vérin directeur (22, 22') respectif. L'ensemble vérin directeur droit (22) et bielle droite (16) est préférentiellement identique et symétrique avec l'ensemble vérin directeur gauche (22') et bielle gauche (16') par rapport au plan médian (17). En vue de réduire le nombre de composants et/ou de vérins et de conduites de la machine (1), seuls deux vérins directeurs (22, 22') relient préférentiellement le cadre (2) à l'outil (9), respectivement l'outil (9) et la bielle (16, 16') respective.

Ainsi qu'illustré sur les figures 2 à 5, dans le mode de réalisation préféré, chaque bielle (16, 16') est directement articulée avec le vérin directeur (22, 22') respectif. Formulé autrement, dans le mode de réalisation préféré, aucune pièce intermédiaire ne relie une bielle (16, 16') et son vérin directeur (22, 22') respectif, réduisant ainsi le nombre de composants et d'articulations de la machine (1), la rendant ainsi plus simple et économique. Dans le mode de réalisation préféré, afin d'autoriser le mouvement de l'outil (9) d'une part autour de l'axe de pivot (19), et d'autre part autour de l'axe transversal (21), chaque vérin élévateur (22, 22') est articulé avec l'outil (9), respectivement avec la poutre (11), suivant une articulation arrière (32, 32') respective. Dans le mode de réalisation préféré, chaque articulation arrière (32, 32') est réalisée sous la forme d'une rotule ou liaison cardan.

Il ressort par ailleurs des figures 2, 4 et 5 que dans le mode de réalisation préféré, chaque vérin directeur (22, 22') est aligné avec la bielle (16, 16') respective. Ainsi, chaque vérin directeur (22, 22') est fixé avec la bielle (16, 16') respective de manière à être dans son prolongement quelle que soit la position de la machine (1). Une telle caractéristique permet de simplifier la construction de la machine (1). De plus, le fait que chaque vérin directeur (22, 22') soit constamment aligné avec la bielle (16, 16') respective implique qu'il nécessite une course moindre afin d'amener l'outil (9) en appui sur la butée arrière (29), réduisant le poids et le coût de revient de la machine (1). Un autre intérêt d'un vérin à dimension réduite est qu'il est plus rapide de le transposer entre sa longueur minimale et sa longueur maximale, faisant ainsi gagner du temps à l'utilisateur. Il ressort de ce qui précède que chaque vérin directeur (22, 22') est constamment parallèle à la bielle (16, 16') respective.

Dans une deuxième variante de réalisation alternative compatible avec la première variante, seul un vérin directeur (22, 22') est monté sur la machine (1). Afin que son actionnement en allongement permette de compenser la rétractation des bielles (16, 16') dans la position soulevée, l'unique vérin directeur (22, 22') est articulé à une de ses extrémités avec les deux bielles (16, 16') et à son autre extrémité avec l'outil (9), respectivement avec la poutre (11). Dans cette deuxième variante, afin d'éviter que l'actionnement de l'unique vérin directeur (22, 22') induise un couple sur l'outil (9) autour de l'axe de pivotement (19), l'unique vérin directeur (22, 22') est agencé de manière à rester parallèle à la poutre (11). Telle que représentée sur la figure 6, la machine (1) peut ne comporter qu'un unique vérin directeur (22, 22') articulé avec une unique biellette (23, 23') attachées aux bielles (16, 16'). Le vérin directeur (22, 22') peut aussi être articulé avec deux biellettes (23, 23'), chacune attachée à une bielle (16, 16') respective.

Dans les première et deuxième variantes, le fait que l'outil (9), la ou chaque biellette (23, 23') et le ou chaque vérin directeur (22,22') soient articulés entre eux suivant des axes horizontaux permet qu'un actionnement, respectivement un allongement, de l'au moins un vérin directeur (22) permet d'éloigner l'outil (9) du sol et/ou de rétracter au moins une bielle (16, 16'). Dans le mode de réalisation préféré, le fait que chaque bielle (16,16') est alignée avec le vérin directeur (22, 22') respectif implique que l'actionnement, respectivement l'allongement, de l'au moins un vérin directeur (22, 22') permet d'éloigner l'outil (9) du sol et/ou de rétracter au moins une bielle (16, 16'). Ainsi, quel que soit le mode ou la variante de réalisation, une fois les bielles (16,16') rétractées, l'actionnement, respectivement l'allongement, de l'au moins un vérin directeur (22, 22') permet d'éloigner l'outil (9) du sol. Autrement dit, quel que soit le mode ou la variante de réalisation, en position soulevée, l'allongement de l'au moins un vérin directeur (22, 22') permet d'éloigner l'outil (9) du sol.Tel qu'il ressort des figures 2 à 6, afin d'éviter des à-coups lorsque les bielles (16, 16') arrivent en butée à leur longueur minimale, il peut être prévu un moyen d'amortissement (33, 33'). De préférence, à chaque bielle (16, 16') est associé un moyen d'amortissement (33, 33') respectif agencé de manière à amortir la rétractation de la bielle (16, 16') associée. Tel qu'il est représenté sur la figure 6, chaque moyen d'amortissement (33, 33') peut être réalisé par un ressort de compression qu'un butoir comprime lorsque la bielle (16, 16') associée arrive à une certaine longueur.

Dans le mode de réalisation préféré, chaque bielle (16, 16') est réalisée par un vérin stabilisateur (34, 34') hydraulique. Préférentiellement, chaque moyen d'amortissement (33, 33') est alors réalisé par un accumulateur (35, 35') hydropneumatique. Chaque accumulateur (35, 35') est agencé de manière à ralentir la rétractation du vérin hydraulique (34, 34'). Préférentiellement, chaque vérin stabilisateur (34, 34') est simple effet et relié en circuit fermé à un accumulateur (35, 35') respectif. Tel qu'il ressort de la figure 7, afin de favoriser l'actionnement, respectivement l'allongement, du vérin directeur (22, 22') par rapport au vérin stabilisateur (34, 34') de la bielle (16, 16') associée, le diamètre du piston du vérin directeur (22, 22') est préférentiellement supérieur à celui du vérin stabilisateur (34, 34') de la bielle (16, 16') associée. Ainsi, si, dans la position de travail, un effort tend à éloigner l'articulation avant (31, 31') de l'articulation arrière (32, 32') respective, le vérin directeur (22, 22') aura tendance à s'allonger avant le vérin stabilisateur (34, 34') de la bielle (16, 16') associée. Chaque moyen d'amortissement (33, 33') peut être réalisé par un accumulateur (35, 35') et/ou un ressort. Alternativement, chaque bielle (16, 16') peut être réalisée par deux barres télescopiques, ou encore par un système à axe coulissant dans un trou oblong.

Tels qu'il est agencé, le poids de l'outil (9) permet de transposer la machine (1) depuis sa position soulevée vers sa position de travail. Ainsi, dans le mode de réalisation préféré, les vérins directeurs (22, 22') sont préférentiellement simple effet, réduisant le nombre de conduites nécessaires et le cout de revient de la machine (1). De manière simple, les vérins directeurs (22, 22') sont reliés à des reniflards. Préférentiellement, le ou chaque vérin directeur (22, 22') est agencé de manière à être rétracté sous l'effet du poids de l'outil (9). Alimenter l'au moins un vérin directeur (22, 22') revient ainsi à l'allonger et permet d'éloigner l'outil (9) du sol. Rétracter les vérins directeurs (22, 22') revient ainsi à les relier avec le réservoir (26) à l'aide du distributeur (28). Tel que représenté sur la figure 7, dans le mode de réalisation préféré, afin de pouvoir régler simplement la longueur des vérins directeurs (22, 22') et de réduire le nombre de distributeur (28) nécessaires, les vérins directeurs (22, 22') sont hydrauliquement reliés au même distributeur (28) hydraulique.

Ainsi qu'il ressort des figures 2 à 5, afin d'éviter une rotation non désirée autour de son axe de translation, chaque vérin directeur (22, 22') peut être équipé d'un guide (36, 36'). De préférence, chaque guide (36, 36') comporte une plaque solidaire de la tige du vérin directeur (22, 22') respectif, avec un trou oblong parallèle à l'axe de translation du vérin directeur (22, 22') respectif, et dans lequel un axe solidaire du cylindre du vérin directeur (22, 22') respectif est monté coulissant.

De manière à autoriser une bonne adaptation de la machine (1) par rapport au tracteur (4) sur un sol accidenté ou irrégulier lors de leur avance, chaque point (7, 7') peut se déplacer verticalement par rapport au cadre (2). Préférentiellement, le cadre (2) comporte deux leviers, chacun étant articulé avec un point (7, 7') respectif autour d'un axe horizontal, distincts ou non. Dans le mode de réalisation préféré, afin d'absorber les irrégularités du sol, l'attelage (3) est monté flottant sur le tracteur (4) afin que la machine (1) puisse se déplacer librement verticalement (avec l'attelage (3)).

L'invention n'est pas limitée aux mode et variantes de réalisation décrit(es) et représenté(es) sur les figures. Des modifications restent possibles du point de vue de la constitution des divers éléments ou par substitution d'équivalents techniques, sans sortir du domaine de protection de l'invention.

## Revendications

1. Machine (1) agricole pouvant occuper une position de travail et au moins une position soulevée dans laquelle tout le poids de la machine (1) est reporté sur un tracteur (4) apte à se déplacer avec la machine (1) dans une direction d'avance (A), la machine (1) comportant :
• un cadre (2) destiné à être relié à un attelage (3) à trois points d'un tracteur (4),
• un outil (9) pouvant reposer sur le sol par le biais d'appuis (12), l'outil (9) étant monté pivotant par rapport au cadre (2) autour d'un axe de pivot (19), l'outil (9) étant par ailleurs monté pivotant suivant un axe transversal (21),
• deux bielles (16, 16') de longueur variable, chacune formant, lorsqu'elle est à sa longueur minimale, une butée permettant de limiter le pivotement de l'outil (9) autour de l'axe de pivot (19), la machine (1) étant agencée de sorte que les bielles (16, 16') tendent à se rétracter jusqu'à leur longueur minimale dans sa position soulevée,
machine **caractérisée en ce que** soit au moins un vérin directeur (22, 22') est fixé à une de ses extrémités avec au moins une bielle (16, 16') et à son autre extrémité avec l'outil (9), soit au moins un vérin directeur (22, 22') est fixé avec au moins une biellette (23, 23') articulée d'une part avec l'outil (9) et d'autre part avec au moins une des bielles (16, 16').

2. Machine selon la revendication 1, **caractérisée en ce que** le ou chaque vérin directeur (22, 22') est relié à un distributeur (28) du tracteur (4) et **en ce que**, dans la position de travail de la machine (1), l'au moins un vérin directeur (22, 22') est maintenu à sa longueur minimale ou monté flottant.

3. Machine selon l'une des revendications 1 ou 2, **caractérisée en ce que** l'outil (9) est directement articulé sur le cadre (2) autour de l'axe transversal (21).

4. Machine selon l'une quelconque des revendications 1 à 3, **caractérisée en ce que** la machine (1) comporte une butée arrière (29) permettant de limiter le pivotement de l'outil (9) autour de l'axe transversal (21), et **en ce que** l'au moins un vérin directeur (22, 22') est dimensionné de sorte que l'outil (9) soit en appui sur la butée arrière (29) lorsque le ou chaque vérin directeur (22, 22') est allongé.

5. Machine selon l'une quelconque des revendications 1 à 4, **caractérisée en ce qu'**à chaque bielle (16, 16') est associé un vérin directeur (22, 22') respectif, et **en ce que** chaque bielle (16, 16') est directement articulée avec le vérin directeur (22, 22') respectif.

6. Machine selon l'une quelconque des revendications 1 à 5, **caractérisée en ce qu'**à chaque bielle (16, 16') est associé un moyen d'amortissement (33, 33') respectif agencé de manière à amortir la rétractation de la bielle (16, 16') associée.

7. Machine selon la revendication 5, **caractérisée en ce que** les vérins directeurs (22, 22') sont simple effet et hydrauliquement reliés au même distributeur (28) hydraulique.

8. Machine selon l'une quelconque des revendications 1 à 7, **caractérisée en ce que** l'outil (9) comporte un rotor (10) et une poutre (11), et **en ce que** l'axe transversal (21) est situé sur le haut du cadre (2) tandis que l'au moins un vérin directeur (22, 22') est articulé sur le bas de la poutre (11).

9. Machine selon l'une quelconque des revendications 1 à 8, **caractérisée en ce qu'**à chaque bielle (16, 16') est associé un vérin directeur (22, 22') respectif, et **en ce que** chaque vérin directeur (22, 22') est aligné avec la bielle (16, 16') respective.
